Europäisches Patentamt

European Patent Office

Office européen des brevets

(19)

(11) Veröffentlichungsnummer: **0 015 982**
**B1**

# EUROPÄISCHE PATENTSCHRIFT

(12)

(45) Veröffentlichungstag der Patentschrift:
29.12.82

(21) Anmeldenummer: **79900487.4**

(22) Anmeldetag: **22.05.79**

(86) Internationale Anmeldenummer:
**PCT/CH 79/00072**

(87) Internationale Veröffentlichungsnummer:
**WO 80/00046 (10.01.80** Gazette 80/1)

(51) Int. Cl.³: **G 21 C 19/06,** E 04 H 7/00

(54) GESTELL ZUM ZWISCHENLAGERN VON KERNREAKTOR-BRENNELEMENTBÜNDELN.

(30) Priorität: **09.06.78 CH 6310/78**

(43) Veröffentlichungstag der Anmeldung:
**01.10.80 Patentblatt 80/20**

(45) Bekanntmachung des Hinweises auf die Patenterteilung:
**29.12.82 Patentblatt 82/52**

(84) Benannte Vertragsstaaten:
**DE FR SE**

(56) Entgegenhaltungen:
**DE-A-1 639 396**
**DE-A-2 629 938**
**DE-A-2 637 879**
**DE-A-2 700 520**
**DE-A-2 730 850**
**FR-A-2 211 720**
**FR-A-2 304 993**
**US-A-4 024 406**

(73) Patentinhaber: **GEBRÜDER SULZER AKTIENGESELLSCHAFT**, Zürcherstrasse 9, **CH-8401 Winterthur (CH)**

(72) Erfinder: **Knecht, Max, Guggenbühlstrasse 125, CH-8404 Winterthur (CH)**

Gestell zum Zwischenlagern von Kernreaktor-Brennelementbündeln

Es sind Gestelle zum Zwischenlagern von neuen oder aus Kernreaktoren ausgebauten Brennelementbündeln nach dem Oberbegriff des vorstehenden Anspruchs 1 bekannt, bei denen die Aufnahmerohre lose auf der Bodenplatte stehen und seitlich durch ein Gerüst abgestützt sind, das fest mit der Bodenplatte verbunden ist und sich seitlich an den Bassinwänden abstützt (DE-A-2 629 938). Da aus Sicherheitsgründen — im Hinblick auf Erdbeben — mit erheblichen Horizontalbeschleunigungen gerechnet werden muß, wird bei großen Zwischenlagern das auf Knickung zu bemessende Stützgerüst sehr massiv. Es ergeben sich somit relativ große Abstände zwischen den einzelnen Aufnahmerohren.

Es ist Aufgabe der Erfindung, ein Zwischenlagergestell zu schaffen, das bei gleicher Erdbebensicherheit kleinere Aufnahmerohr-Abstände aufweist, so daß eine gegebene Anzahl von Rohrbündeln in einem kleineren Wasserbassin oder in einem Wasserbassin gegebener Größe eine größere Anzahl von Brennelementbündeln untergebracht werden kann.

Die Aufgabe wird durch die im Kennzeichen des Anspruches 1 genannten Merkmale gelöst. Es ergibt sich dadurch zusätzlich der Vorteil, daß auf seitliches Abstützen eines Gerüstes an der Bassinwand ganz oder teilweise verzichtet werden kann, so daß seitlich des Gestells durchgehende Kanäle zum Überführen der Brennelementbündel aus dem Reaktorsicherheitsbehälter und/oder zum Manipulieren mit Brennelementbündeln freibleiben können.

Durch die Durchtrittsöffnungen gemäß Anspruch 2 wird ein erster Zirkulationspfad für das im Naturumlauf die Brennelemente kühlende Wasser geschaffen.

Die Rippen nach Anspruch 3, die mindestens in Richtung der längeren Ausdehnung des Gestells verlaufen, gestatten, eine bestimmte Tragfähigkeit gegen Ausknicken mit einer geringeren Dicke der Bodenplatte und damit geringerem Materialaufwand zu erreichen.

Durch genaues Nivellieren der Bodenplatte mittels der verstellbaren Schrauben gemäß Anspruch 4 werden nicht nur Schwierigkeiten mit dem Ansetzen des Manupulators vermieden, sondern überdies wird dadurch die Gefahr des Ausknickens der Bodenplatte im Falle von Erdbeben verringert.

Die Maßnahme nach Anspruch 5 eröffnet weitere Wege für den Naturumlauf des die Brennelemente kühlenden Wassers. Die Kühlung wird dadurch vergleichmäßigt und verstärkt.

Die Deckplatte nach Anspruch 6 vermindert durch ihre Dämpfung die Schwingungsfähigkeit des Systems im Falle von Erdbeben. Außerdem erlaubt sie eine einfache, seitliche Abstützung der Gestellelemente im Bereich der oberen Enden der Aufnahmerohre, sei es gegenseitig oder an der Bassinwand.

Durch den Einbau von diagonalen Verstrebungen nach Anspruch 7 vermag die Deckplatte höhere Querkräfte aufzunehmen.

Durch die Maßnahme nach Anspruch 8 werden die Deckplatten auch in Zugrichtung miteinander starr verbunden.

Dadurch, daß gemäß Anspruch 9 die Führungsfunktion den Verbindungselementen übertragen wird, wird die Deckplatte von zusätzlichen spanabhebenden Bearbeitungen verschont.

Die Erfindung wird an einem zeichnerisch dargestellten Ausführungsbeispiel näher erläutert.

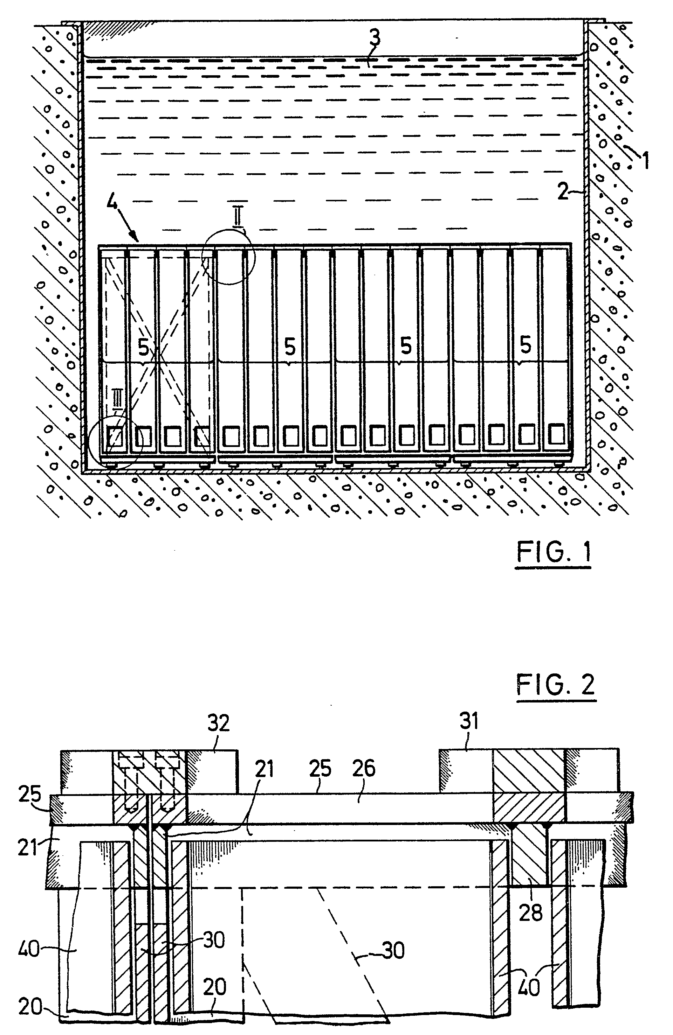

Fig. 1 zeigt einen Vertikalschnitt durch ein Bassin mit einem Gestell nach der Erfindung.

Fig. 2 zeigt, stark vergrößert, einen in Fig. 1 mit II bezeichneten Ausschnitt.

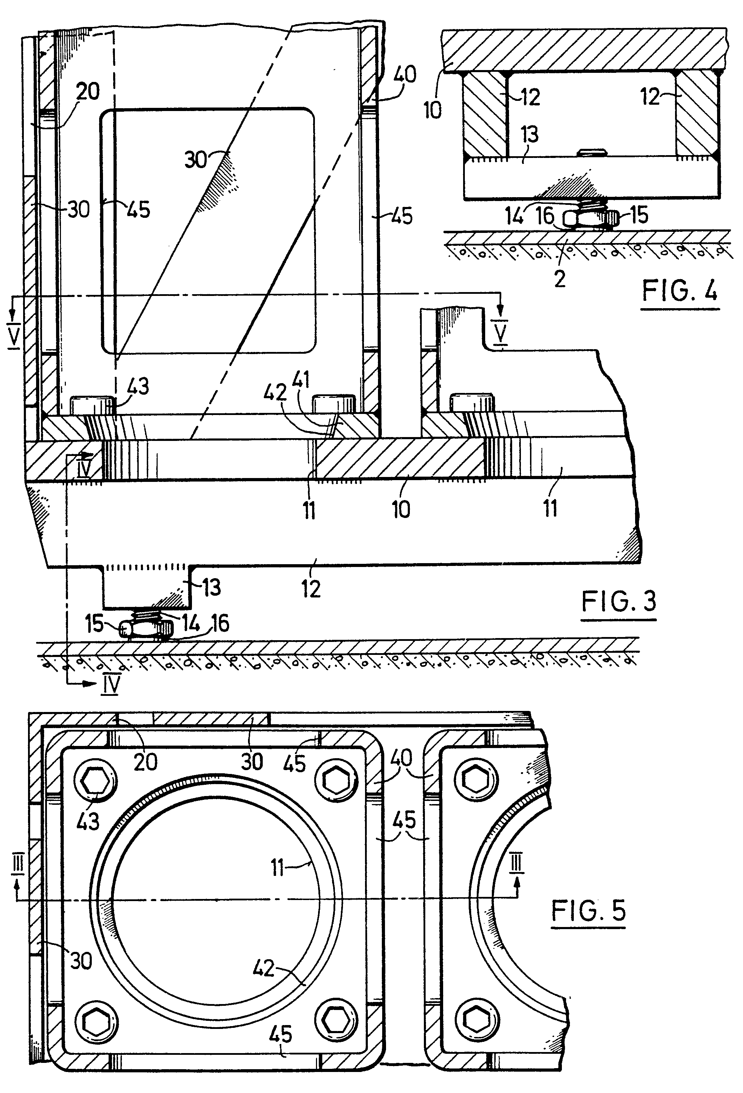

Fig. 3 zeigt — in gleicher Vergrößerung — den Ausschnitt III aus Fig. 1.

Fig. 4 stellt einen Schnitt nach der Ebene IV-IV in Fig. 3 dar.

Fig. 5 ist ein Horizontalschnitt nach der Ebene V-V in Fig. 3.

In einem aus armiertem Beton hergestellten Bassin 1, das mit nichtrostendem Stahlblech 2 ausgekleidet und mit Wasser 3 gefüllt ist, befindet sich ein Gestell 4, das aus mehreren, aneinander anschließenden Reihen von Gestelleinheiten 5 besteht, von denen in der Zeichnung nur eine Reihe erkennbar ist. Jede Gestelleinheit besteht aus einer massiven Bodenplatte 10, die in quadratischer Teilung Bohrungen 11 aufweist. Zwischen den Bohrungen 11 sind auf der Unterseite der Bodenplatte 10 untereinander parallele Rippen 12 angeschweißt, die jeweils paarweise durch Stege 13 miteinander verbunden sind. In den Stegen 13 sind Gewindebohrungen vorgesehen, in denen Gewindebolzen 14 mit Sechskantkopf 15 sitzen. Der Kopf 15 dieser Bolzen 14 ist stirnseitig leicht konkav ausgedreht. An der konkaven Fläche liegt eine Rondelle 16 an, deren obere Stirnfläche konvex ausgebildet ist. Die Bolzen 14 stützen sich über diese Rondellen 16 auf dem als Futter dienenden Stahlblech 2 des Bassinbodens ab. Auf den vier Ecken der Bodenplatte ist die Stirnseite je eines sich nach oben erstreckenden Winkelprofils 20 angeschweißt. Die vier Winkelprofile 20 sind an ihren oberen Enden mit einem quadratischen Rahmen 21 aus hochkantstehenden Flacheisen verbunden, welcher am Umfang einer quadratischen Deckplatte 25 angeschweißt ist. Diese quadratische Deckplatte weist, ausgerichtet auf die Bohrungen 11 der Bodenplatte 10, quadratische Öffnungen 26 auf, wobei die Seiten der Öffnungen zu den Seiten der Deckplatte 25 parallel verlaufen. In der Mitte zwischen benachbarten Reihen von Öffnungen 26 verlaufen jeweils auf der Unterseite der Deckplatte 25 sich kreuzende dicke Rippen 28, die ebenfalls mit der Deckplatte 25 verschweißt sind. Die Ecken zwischen den Winkelprofilen 20 und der Bodenplatte 10 einerseits und den Winkelprofilen und dem Rahmen 21 andererseits sind über diagonal angeordnete Traversen 30 miteinander verbunden. In den Eckpunkten zwischen jeweils vier quadratischen Öffnungen 26 sind auf der Deckplatte 25 kreuzförmige Anschlag- und Führungsstücke 31 für die Beladeeinrichtung aufgeschraubt. Am Rand der Deckplatte 25 einer Einheit sind analoge, kreuzförmige Anschlagstücke 32 angeordnet, die auf die benachbarte Deckplatte übergreifen und auf diese Weise die einzelnen Einheiten miteinander verbinden.

Unter jeder der quadratischen Öffnungen 26 steht auf der Bodenplatte 10 ein vertikales Vierkant-Aufnahmerohr 40, das bis auf ein geringes Vertikalspiel an die Deckplatte 25 heranreicht. Auf der Fußseite enden die Aufnahmerohre 40 mit einem nach innen gerichteten Flansch 41, der eine nach oben erweiterte, konische Bohrung 42 zur Zentrierung des Brennelementbündels und vier Durchgangslöcher für die Bolzen von Schrauben 43 aufweist. Die Schrauben 43 sitzen in passend angeordneten Gewindebohrungen der Bodenplatte 10.

In den vier Seitenwänden der Vierkant-Aufnahmerohre 40 sind mit geringem Abstand vom Flansch 41 rechteckige Ausschnitte 45 vorgesehen, die als Eintrittsöffnungen für das im Naturumlauf zirkulierende Wasser dienen. Die quadratischen Öffnungen 26 in der Deckplatte 25 sind um das geringe seitliche Spiel, das zwischen dem oberen Ende der Aufnahmerohre 40 und dem Rahmen 21 bzw. den Rippen 28 besteht, weiter als die Innenkontur der Aufnahmerohre 40. Die Vierkant-Aufnahmerohre 40 weisen zum Einfangen der Neutronenstrahlung nicht dargestellte Boreinlagen auf.

Beim Zusammenbau der Anlage werden die Aufnahmerohre 40 auf der fertigen Bodenplatte 10 angeschraubt und erst hierauf die Deckplatte 25 mit dem Rahmen 21 auf die Winkelprofile 20 aufgeschweißt. Die Gestelleinheiten 5 werden sodann in das Bassin eingebracht und dort durch Verstellen der Schrauben 14 justiert und durch die Anschlagstücke 32 miteinander verbunden. Nach exakter Maßkontrolle wird das Wasser ins Bassin eingefüllt. Nun kann die Beschickung der Aufnahmerohre 40 mit Brennelementbündeln erfolgen, wobei die Beschickungseinrichtung an den Führungsstücken 31, 32 abgestützt und zentriert wird. Zu diesem Zwecke können die Führungsstücke 31, 32 Führungsbohrungen oder -schlitze aufweisen.

In ihrer einfachsten, zeichnerisch nicht dargestellten Form besteht das Gestell nach der Erfindung lediglich aus einer Bodenplatte 10 mit den darauf aufgeschraubten Aufnahmerohren 40. Das Gerüst 20, 21, 30 und die Deckplatte 25 entfallen.

An den Aufnahmerohren 40 können die im Bereich der Ausschnitte 45 verbleibenden, vertikalen Stege, z. B. durch innen aufgeschweißte Winkeleisen, verstärkt sein.

## Patentansprüche

1. Gestell (4) zum Zwischenlagern von Kernreaktor-Brennelementbündeln in einem Wasserbassin, mit einer Bodenplatte und vertikal angeordneten Vierkant-Aufnahmerohren (40), dadurch gekennzeichnet, daß die Aufnahmerohre (40) fußseitig mit einem nach innen gerichteten Flansch (41) versehen sind und daß sie über diesen Flansch mit der Bodenplatte (10) fest verschraubt sind.

2. Gestell nach Anspruch 1, dadurch gekennzeichnet, daß die Bodenplatte (10) auf die Achsen der Aufnahmerohre ausgerichtete Durchtrittsöffnungen (11) aufweist.

3. Gestell nach Anspruch 2, dadurch gekennzeichnet, daß die Bodenplatte (10) durch auf ihrer Unterseite zwischen den Durchtrittsöffnungen verlaufende Rippen (12) versteift ist.

4. Gestell nach einem der Ansprüche 1 bis 3, dadurch gekennzeichnet, daß an der Bodenplatte verstellbare Schrauben (14) vorgesehen sind, über welche die Lage der Bodenplatte an etwaige Unebenheiten des Bassinbodens angepaßt werden kann.

5. Gestell nach einem der Ansprüche 1 bis 4, dadurch gekennzeichnet, daß die Aufnahmerohre (40) im Bereich ihres unteren Endes seitliche Eintrittsöffnungen (45) für im Naturumlauf zirkulierendes Wasser aufweisen.

6. Gestell nach einem der Ansprüche 1 und 2, dadurch gekennzeichnet, daß die Aufnahmerohre von einer Deckplatte (25) mit viereckigen Öffnungen (26) zum Einführen der Brennelementbündel übergriffen sind und daß mit Abstand von den Kanten dieser Öffnungen an der Deckplatte ein Rahmen (21) angeordnet ist, der über vertikale Winkelprofile (20) mit der Bodenplatte (10) verschweißt ist.

7. Gestell nach Anspruch 6, dadurch gekennzeichnet, daß die Enden der Winkelprofile (20) über in deren Ebenen verlaufende Flacheisenstäbe (30) diagonal miteinander verbunden sind.

8. Gestell nach einem der Ansprüche 6 und 7, dadurch gekennzeichnet, daß es in mehrere Gestelleinheiten (5) unterteilt ist, wobei Boden- und Deckplatte jeder Einheit sich über die selben Aufnahmerohre (40) erstrecken, und daß jeweils benachbarte Gestelleinheiten (5) durch auf der Deckplatte aufgeschraubte Verbindungselemente (32) verbunden sind.

9. Gestell nach Anspruch 8, dadurch gekennzeichnet, daß die Verbindungselemente (32) gleichzeitig der Führung einer Einrichtung zum Ein- und Ausbau der Brennelementbündel dienen.

10. Gestell nach Anspruch 6, dadurch gekennzeichnet, daß innerhalb des Rahmens (21) ein Gitterwerk von Rippen (28) mit der Deckplatte verschweißt ist.

## Claims

1. A frame (4) for the intermediate storage of nuclear reactor fuel element bunches in a water basin, the frame having a baseplate and vertical square receiving tubes (40), characterised in that the receiving tubes (40) have at their bottom end an inwardly directed flange (41) by way of which they are rigidly secured to the baseplate (10).

2. A frame according to claim 1, characterised in that the baseplate (10) is formed with through orifices (11) aligned on the axes of the receiving tubes.

3. A frame according to claim 2, characterised in that the baseplate (10) is stiffened by ribs (12) which extend on the bottom of the baseplate between the orifices (11).

4. A frame according to any of claims 1 to 3, characterised in that adjustable screws (44) are provided on the baseplate for adaptation of the position thereof to any unevennesses of the basin base.

5. A frame according to any of claims 1 to 4, characterised in that the receiving tubes (40) are formed near their bottom end with lateral entry apertures (45) for water circulating by natural convection.

6. A frame according to claim 1 and/or 2, characterised in that a cover plate (25) formed with square orfices (26) for the introduction of the fuel element bunches engages over the receiving tubes and a frame (21) is disposed on the cover plate (25) at a distance from the edges of the orifices (26), the frame (21) being welded by way of vertical angle sections (20) to the baseplate (10).

7. A frame according to claim 6, characterised in that the ends of the angle sections (20) are interconnected diagonally by way of flat iron bars or rods or the like (30) which extend in their planes.

8. A frame according to claim 6 and/or 7, characterised in that it is subdivided into a number of frame units (5), the baseplate and cover plate of each unit extending over the same receiving tubes (40), and adjacent frame units (5) are interconnected by connecting elements (32) screwed to the cover plate.

9. A frame according to claim 8, characterised in that the connecting elements (32) also serve to guide a facility for introducing and removing the fuel element bunches.

10. A frame according to claim 6, characterised in that a lattice work of ribs (28) is welded to the cover plate inside the frame (21).

## Revendications

1. Bâti (4) pour entreposage de faisceaux d'éléments de combustible pour réacteur nucléaire dans un bassin d'eau, comprenant une plaque de fond et des tubes de réception à quatre pans (40) disposés verticalement, caractérisé en ce que les tubes de réception (40) sont munis du côté inférieur d'un rebord (41) dirigé vers l'intérieur et sont vissés sur ce rebord fixement à la plaque de fond (10).

2. Bâti selon la revendication 1, caractérisé en ce que la plaque de fond (10) présente des orifices de passage (11) alignés sur les axes des tubes de réception.

3. Bâti selon la revendication 2, caractérisé en ce que la plaque de fond (10) est rigidifiée par des nervures (12) s'étendant sur son côté inférieur entre les orifices de passage.

4. Bâti selon l'une des revendications 1 à 3, caractérisé en ce que sur la plaque de fond sont prévues des vis réglables (14) par l'intermédiaire desquelles on peut adapter la position de la plaque de fon à des inégalités éventuelles du fond du bassin.

5. Bâti selon l'une des revendications 1 à 4, caractérisé en ce que les tubes de réception (40) présentent, au voisinage de leur extrémité inférieure, des orifices latéraux d'entrée (45) pour l'eau circulant en un mouvement naturel.

6. Bâti selon l'une des revendications 1 et 2, caractérisé en ce que les tubes de réception sont chevauchés par un panneau de couverture (25) ayant des orifices rectangulaires (26) pour l'introduction des faisceaux des éléments de combustible et en ce que, à une distance des bords de ces orifices, on prévoit sur le panneau de couverture un chassis (21) qui est soudé à la plaque de fond (10) par des profilés en cornière verticaux (20).

7. Bâti selon la revendication 6, caractérisé en ce que les extrémités des profilés en cornière (20) sont reliés l'un à l'autre diagonalement par des barreaux en fer plat (30) s'étendant dans leurs plans.

8. Bâti selon l'une des revendications 6 et 7, caractérisé en ce qu'il est subdivisé en plusieurs unités de bâti (5), la plaque de fond et le panneau de couverture de chaque unité s'étendant sur les mêmes tubes de réception (40), et en ce que les unités de bâti (5) voisines respectives sont reliées par des éléments de liaison 32 vissés sur le panneau de couverture.

9. Bâti selon la revendication 8, caractérisé en ce que les éléments de liaison (32) servent en même temps au guidage d'un dispositif pour le montage et le démontage des faisceaux d'éléments de combustible.

10. Bâti selon la revendication 6, caractérisé en ce qu'à l'intérieur du chassis (21) est soudé au panneau de couverture un treillis de nervures (28).

FIG. 1

FIG. 2

0 015 982

FIG. 4

FIG. 3

FIG. 5